# EUROPEAN PATENT APPLICATION

(11) **EP 3 425 605 A1**
(43) Date of publication of application: **09.01.2019**
(21) Application number: 17778930.2
(22) Date of filing: 15.03.2017
(51) Int. Cl.: G08G 1/00, G08G 1/01

(54) **PEOPLE FLOW EVALUATION SYSTEM, AND METHOD FOR RESEARCHING PEOPLE FLOW CONTROL**

(30) Priority: 04.04.2016 JP 2016074843
(71) Applicant: Hitachi, Ltd., Tokyo 100-8280 (JP)
(72) Inventor: KATOU, Manabu, Tokyo 100-8280 (JP); FUJIWARA, Masayasu, Tokyo 100-8280 (JP); NING, Rui, Tokyo 100-8280 (JP)
(74) Representative: Manitz Finsterwald Patentanwälte PartmbB
(86) International application number: PCT/JP2017/010293
(87) International publication number: WO 2017/175551

(57) **Abstract**

There are provided simulation means for evaluating, in advance according to prescribed evaluation criteria, what kinds of effects there may be when a business proprietor who manages facilities of a train station or a public space introduces equipment to control the flow of people. The simulation means includes: a receiving unit for receiving people flow information; an input unit for inputting people flow control items; a data management unit for storing people flow action information; a control function operation unit for calculating control functions from the input people flow control items and the action information stored in the data management unit; a people flow operation unit for performing simulation processing on people flow using the people flow information and the control functions; and an effect operation unit for calculating people flow control effects on the basis of the people flow simulation results.

## Description

### Technical Field

The present invention relates to a people flow evaluation system for evaluating people flows in a train station or in a building.

### Background Art

In a train station, not only the daily congestions of commuting time zones but also the congestions increased due to the transport disorders of the railway or various events frequently occur, and therefore there are concerns about the occurrences of the delays of trains due to the increases of times needed for passengers to get on and off trains and the occurrences of crowd accidents such as tumbles from platforms. In order to prevent the delays of trains and crowd accidents due to congestions, and to realize the comfortable spaces of train stations by mitigating congestions even in normal times, simulation tools for evaluating in advance how to control the flows of people in train station premises for increasing the safety and comfort are needed.

Patent document 1 is disclosed as a background technology in this technical field. This patent document says, "A people flow guidance apparatus comprises: an unavoidable bumped amount calculation unit that obtains the number of people who can ride on trains at each train station based on the operation state of the relevant route, and subtracts the number from the number of people who have to ride on trains which is stored for each train station in advance to calculate the number of people who cannot ride on trains at each train station as an unavoidable bumped amount; a bumped area selection unit that holds plural areas, which are available in each train station, in association with the capacities of the respective plural areas, and performs processing for selecting an area as a guidance destination bumped area in a prescribed order, and repeats the processing until a total sum of the capacities becomes equal to or more than the unavoidable dumped amount; a guidance unit that distributes guidance information for guiding people to the selected guidance destination bumped areas".

### Citation List

### Patent Document

Patent document 1: Japanese Patent Application Laid-Open No. 2015-108913

### Summary of the Invention

### Technical Problem

However, in the case of using the apparatus according to Patent document 1, it is impossible to verify an advantageous effect, which is obtained by installing equipment for controlling the flows of people in order to mitigate congestions in advance according to a prescribed evaluation criterion. Therefore, a business proprietor who manages railway facilities cannot evaluate or judge in advance what kind of advantageous effects can be obtained by introducing certain kinds of equipment. An object of the present invention is to provide a system in which how to install equipment for controlling the flows of people in order to mitigate congestions can be verified. Solution to Problem

In order to solve the above-mentioned problem, it is conceivable that configurations described in the appended claims are adopted, for example. The present invention includes plural means for solving the above-mentioned problem, and an example of the plural means includes: a receiving unit for receiving people flow information; an input unit for inputting people flow control information; a data management unit for storing people flow control information data; a control function operation unit for calculating control functions from the people flow control information and the people flow control information data; a people flow operation unit for performing simulation processing on people flows from the people flow information and the control functions; and an effect operation unit for calculating a people flow control effect on the basis of the people flow simulation results of the people flow operation unit.

### Advantageous Effects of the Invention

According to the present invention, a system, in which how to install equipment for controlling the flows of people in order to mitigate congestions can be verified, can be provided.

### Brief Description of Drawings

Figure 1 is a system block diagram according to an Embodiment 1, an Embodiment 2, or an Embodiment 3.
Figure 2 is a diagram showing an example of movement demand data recorded in a movement demand database.
Figure 3 is a diagram showing an example of space information recorded in a space information database.
Figure 4 is a diagram showing an example of people flow control information recorded in a people flow control information database.
Figure 5 is a diagram showing an example of a method for inputting in an input unit.
Figure 6 is a flowchart showing the processing steps of a control function operation unit.
Figure 7 is a diagram showing an example of the display of a result calculated by the control function operation unit.
Figure 8 is a flowchart showing the processing steps of a people flow operation unit.
Figure 9 is a diagram showing an example of the display of a result calculated by an introduction effect operation unit.
Figure 10 is a diagram showing an example of people flow control information data recorded in a people flow control information database in an Embodiment 2.
Figure 11 is a flowchart showing the processing steps of a control function operation unit in the Embodiment 2.
Figure 12 is a diagram showing an example of people flow control information data recorded in a people flow control information database in an Embodiment 3.
Figure 13 is a diagram showing an example of space information recorded in a space information database in the Embodiment 3.

### Description of Embodiments

Hereinafter, explained with reference to the accompanying drawings as examples are systems in which, by specifying kinds of equipment for controlling a people flow and the position thereof on a simulation screen, a control condition for controlling the people flow in the premises and the state of congestion and the introduction effect after introducing the facilities can be calculated, so that it becomes possible to easily verify the introduction effect of the people flow control equipment.

### <Embodiment 1>

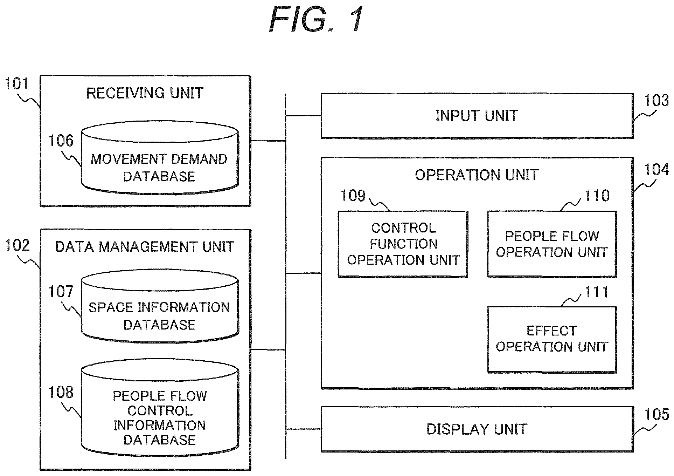

Figure 1 shows a system block diagram according to an Embodiment 1. A people flow evaluation apparatus includes: a receiving unit 101; a data management unit 102; an input unit 103; an operation unit 104; and a display unit 105. In addition, the receiving unit 101 includes a movement demand database 106, and the data management unit 102 includes a space information database 107 and a people flow control information database 108. Furthermore, the operation unit 104 includes a control function operation unit 109; a people flow operation unit 110; and an effect operation unit 111.

Hereinafter, the operations of the respective devices of the people flow evaluation apparatus will be explained in detail.

The receiving unit 101 is a device for storing the movement demand database 106. The movement demand database 106 can be generated using, for example, the history data of entrances/exits recorded in ticket examining machines and data measured by cameras and the like.

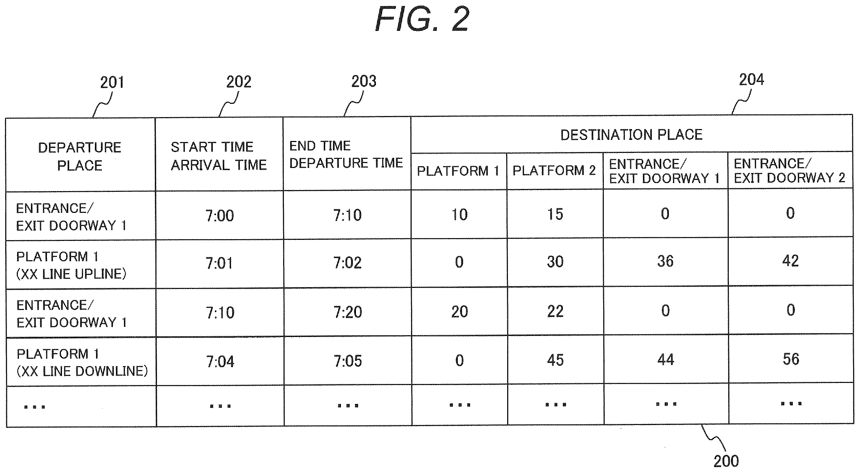

Figure 2 is a diagram showing an example of the data configuration of the movement demand database 106. Movement demand data is data used for estimating the movement amount of people in the future. In the present embodiment, movement demand data 200 is data in which the numbers of passengers, who move from departure places 201 to destination places 204 for respective combinations of the departure places 201 to the destination places 204 and for respective time periods, are recorded. For example, in the case where data is measured in the premises of a train station, the entrance/exit doorways and the platforms of the train station are departure places and destination places respectively. In the case of the departure places are the platforms of the train station, it is also possible to set start times 202 as the arrival times of trains and end times 203 as the departure times of the trains.

The space information database 107 is a database that records space information. The space information are data that become input models into an after-mentioned control function operation unit 109 and people flow operation unit 110 and plural pierces of space information are created for the respective train stations and building facilities that are targets in which congestion predictions are performed.

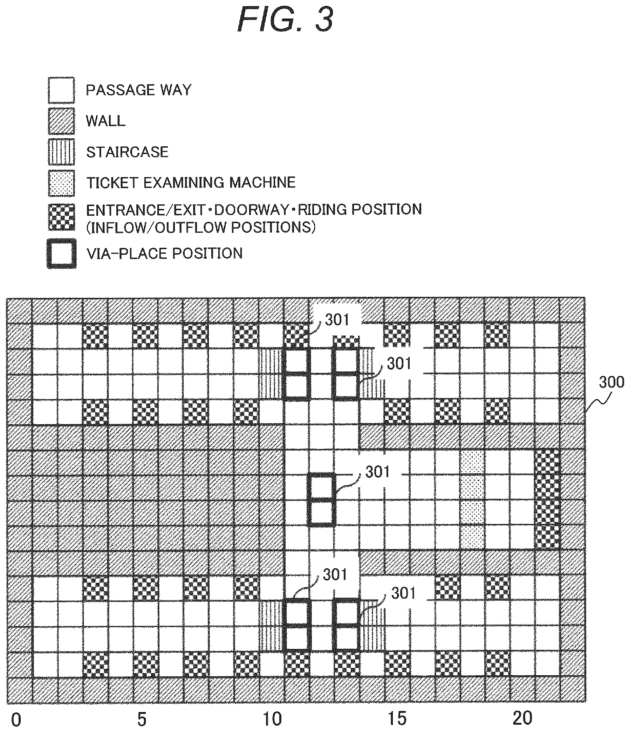

Figure 3 is a diagram showing an example of space information recorded in the space information database 107 included in the data management unit 102. Space information 300 is data representing the space structure of a train station. In the present embodiment, the space information is represented by means of a lattice space obtained by dividing a space in a lattice shape, where the lattice space is a type of space that is used in a people flow simulation using a well-known cell automaton. Lattices included in the lattice space are composed of unit lattices such as passage way lattices; wall lattices; staircase lattices; ticket examining machine lattices; entrance/exit doorway lattices; riding position lattices, and the like. In addition, each lattice has passage enable/disable information; passable velocity information; passable direction information; information about distance costs required for passage; information whether pedestrians can inflow or outflow into the space or not as its own attributes. Furthermore, by trying to build a route network that is composed of plural pairs of adjacent passage-enable lattices connected to each other, a pedestrian agent can search for a route from an inflow position which is a departure place to an outflow position which is a destination place. The inflow position and the outflow position are respectively materialized by an entrance/exit doorway lattice and a riding position lattice. An example in Figure 3 shows the structure of a train station having one ticket gate and two platforms that is represented as a piece of space information using unit lattices. Routes that are searched for and combinations of inflow/outflow positions are set and stored in the space information 300.

In addition, via-place position information 301 is also stored in the space information 300. The via-place position information 301 is information used in the after-mentioned control function operation unit 109, and represents positions via which passengers moving in the premises of a train station may move, so that it is possible to simulate the control of people flows on the basis of this information. Pieces of the via-place position information 301 are installed at spots where routes for destination places have the potential to branch such as spots in front of staircases and spots where concourses branch. It is most effective to install pieces of the via-place position information at branching spots and the like, it is also conceivable that pieces of the via-place position information are installed on passage ways which are not branching spots and the like.

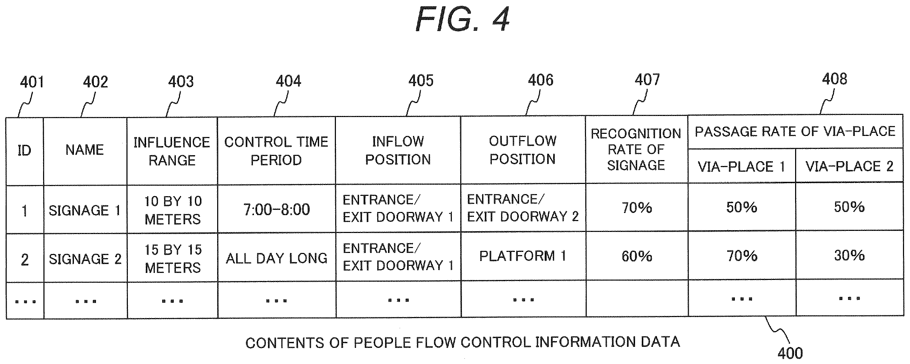

Figure 4 is a diagram showing an example of a data structure recorded in the people flow control information database 108 included in the data management unit 102. In this example, signages displaying congestion states, recommendable routes, and the like are adopted as pieces of people flow information. To put it concretely, this example shows a case where congestion in the premises of a train station is controlled by changing the passage ways of passengers using signages. Here, what is meant by the people flow information is information about types and positions of equipment for controlling people flows.

People flow control information data 400 includes: ID 401; Name 402; Influence Range 403; Control Time Period 404; Inflow Position 405; Outflow Position 406; Recognition Rate of Signage 407; and Passage Rate of Via-Place 408.

ID 401 is an ID that uniquely identifies data. Name 402 is a name for people flow control information. Influence Range 403 is information showing how wide the control information can influence a people flow. Control Time Period 404 is information showing a time period during which the control information is effective. Inflow position 405 and Outflow Position 406 are information showing the departure place and destination place of passengers to whom the control is given. Recognition Rate of Signage 407 is information using which the ratio of passengers that recognize the signage is set among the passengers that move from the departure place specified by the inflow position 405 to the destination place specified by the outflow position 406. Passage Rate of Via-Place 408 is information using which the ratio of passengers that pass through the relevant via-place is set among the passengers who recognize the signage. For example, to exercise some sort of ingenuity in contents displayed in the signage makes it possible to adjust the ratio of passengers who pass through the relevant via-place, so that desired control can be achieved.

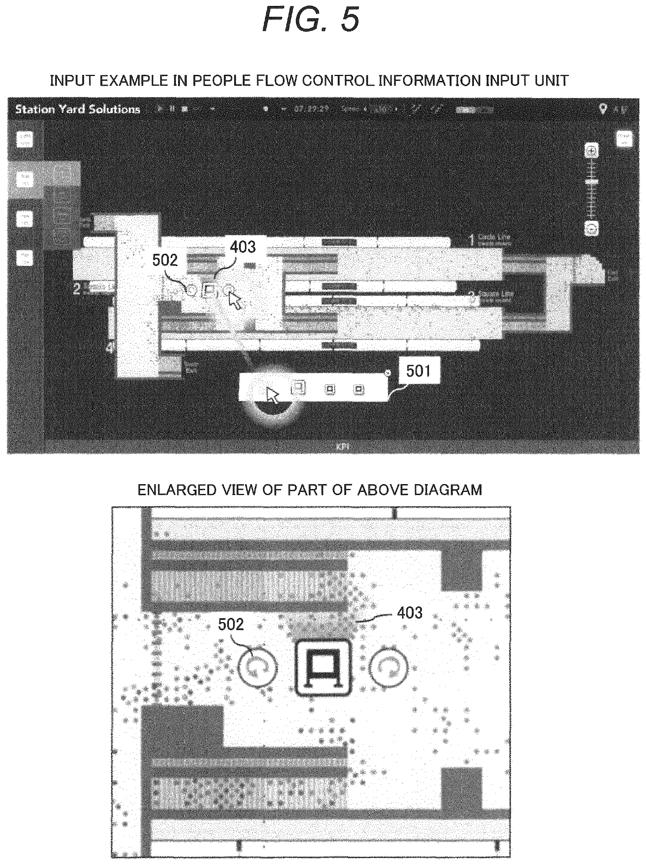

Figure 5 is a diagram showing an example of a method for inputting people flow information in the input unit 103. In Figure 5, an example in which "a work operation for setting a signage that is people control information at an arbitrary place in the premises of a train station" is referred to as "an input" will be shown.

First, plural icons 501 corresponding to respective IDs 401 stored in the people flow control information data 400 are provided. In Figure 5, four kinds of signages are displayed on a line. A user selects one of these icons 501, and dispose it at an arbitrary position of the space information 300 of a train station. On this occasion, an influence range 403 is displayed, and the position and direction of the influence range 403 can be adjusted by changing the direction 502 of the selected icon. In such a way, because the input unit 103 has a function in which one of the plural pieces of people flow information is selected and the selected icon is disposed in a simulation space, a system with high operationality and visibility can be provided. Furthermore, because the input unit 103 has a function in which the direction of the disposition of the selected icon can be selected, a similar advantageous effect can be obtained. Although it is desirable that the position and direction of the disposition should be arbitrarily set, such an advantageous effect can be obtained even in a case where one can be selected out of plural patterns. Here, although, in order to heighten the visibility of the diagram shown in Figure 5, a picture obtained by photographing the space of a train station from above is shown in Figure 5, space information as shown in Figure 3 is associated with this picture.

The control function operation unit 109 is a device for calculating the control conditions of people flows used in the people flow operation unit 110 on the basis of the people flow control information input in the input unit 103 and the people flow control information data 400 stored in the people flow control information database 108 included in the data management unit 102.

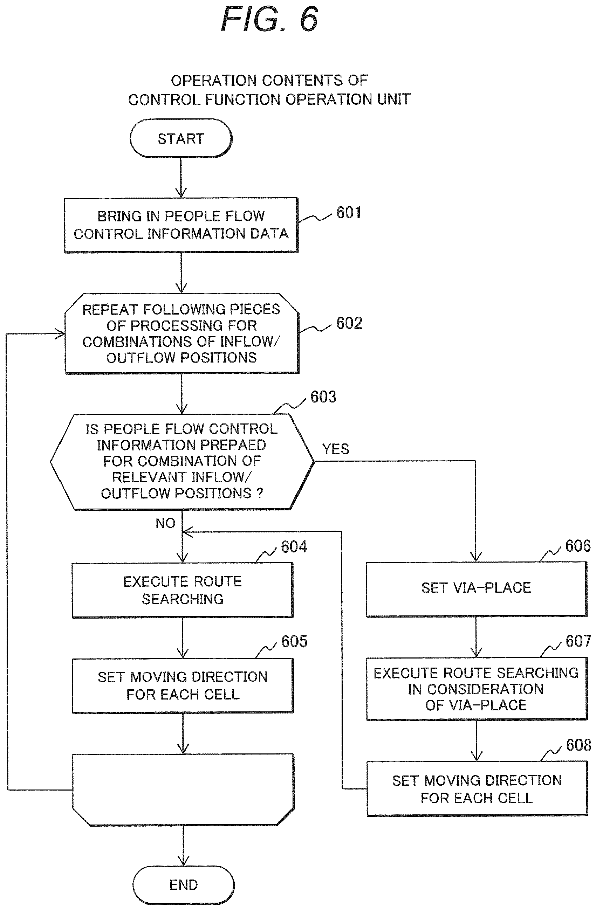

Figure 6 is a flowchart showing the processing steps of the control function operation unit 109. In Figure 6, an example in which, by urging passengers to select desired routes by passing through desired via-places using signages that are people flow control information, congestion in the premises of a train station is mitigated will be explained.

At Step 601, the control function operation unit 109 brings in people flow information from the input unit 103. In addition, the control function operation unit 109 reads the person flow control information data 400 stored in the person flow control information database and the space information 300 stored in the space information database 107.

Step 602 represents the execution of a loop in which pieces of processing at Step 603 to Step 608 are repeated. The number of the repetitions is equal to the number of combinations of inflow/outflow positions specified at the space information 300. These combinations of inflow/outflow positions become combinations of departure places and destination places of passengers.

At Step 603, whether a signage that is people flow information is prepared for a combination of relevant inflow/outflow positions or not is judged. To put it concretely, if an inflow position 405 and an outflow position 406 in the people flow control information data 400 of an ID corresponding to the input people control information are the same as the relevant inflow/outflow positions, it is judged that the signage is prepared.

At Step 603, if it is judged that the people flow control information 400 is not prepared for the combination of the relevant inflow/outflow positions, the flow proceeds to Step 604.

At Step 604, route searching is executed for searching for routes each of which has the inflow position and the outflow position as its start point and end point respectively in a network set in the space information 300, and the shortest route is obtained. An algorithm for the route searching can be materialized using a well-known method such as a Dijkstra method.

Subsequently, at Step 605, a moving direction along the shortest route, which is obtained as the result of the above searching, is set for each cell, and the flow proceeds to the next loop.

On the other hand, at Step 603, if it is judged that the people flow control information 400 is prepared for the combination of the relevant inflow/outflow positions, the flow proceeds to Step 606.

At Step 606, via-place information 407 stored in the people flow control information data 400 is set as a via-place.

At Step 607, the route searching is executed in consideration of the via-place, and then the flow proceeds to Step 608.

At Step 608, a moving direction along the obtained route from the entrance doorway to the via-place or a moving direction along the obtained route from the via-place to the exit doorway is set for each cell. Subsequently, the flow goes back to Step 604, and route searching and setting of the moving direction of each cell for the original combination of inflow/outflow positions are executed.

By executing pieces of processing at Step 606 to Step 608, it becomes possible for each pedestrian agent to change a direction in which it moves so that each pedestrian agent passes through the via-place.

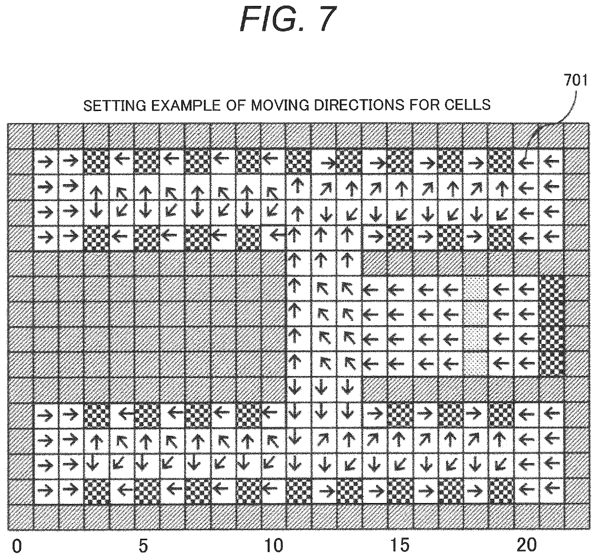

Figure 7 shows the moving directions of cells set in a lattice space, where the moving directions are calculated by the control function operation unit 109. The control function operation unit 109 includes: a function for setting the moving directions at respective places at which pedestrian agents head for the via-places from the departure places and for setting the moving directions at respective places at which pedestrian agents head for the destination places from the via-places. The moving directions 701 of the cells show the moving directions of the agents calculated by the route searching, and the moving directions of the cells are set for the respective combinations of departure places and destination places, or if via-places are existing between the departure places and the destination places, the moving directions of the cells are set for the respective combinations of the departure places and the via-places and for the respective combinations of the via-places and the destination places. By carrying forward passenger agents in these moving directions at every time step, the passenger agents can reach the destinations.

The people flow operation unit 110 is a device that performs processing for moving the pedestrian agents in the moving directions of the cells that are calculated by the control function operation unit 109 and set in the lattice space. The movement processing of the pedestrian agents is materialized by processing in which the pedestrian agents are produced at the inflow positions defined in the space information 300 essentially, moved to the exit doorways in moving directions set in the respective cells, and vanished from the space information when the pedestrian agents reach the outflow positions.

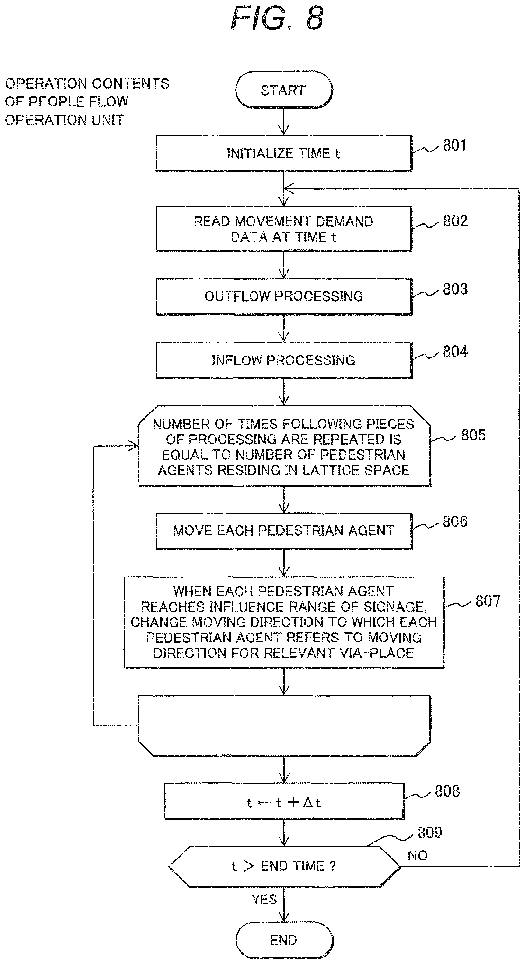

Figure 8 is a flowchart showing the processing steps of the people flow operation unit 110.

At Step 801, the simulation time t is initialized to the start time of the movement processing.

At Step 802, movement demand data at the simulation time t is read from the movement demand data 200.

At Step 803, outflow processing is performed for each exit doorway. To put it concretely, if the destination places of the agents coincide with outflow positions set in lattice spaces in which the agents reside, it is judged that the pedestrian agents reach the destinations, and the pedestrian agents are vanished. The pedestrian agents to be vanished are deleted from the set of pedestrian agents that reside in the lattice space.

At Step 804, the inflow processing is performed for each entrance doorway. To put it concretely, agents who head for the exit doorways are produced uniformly in terms of time according to the number of people defined in the movement demand data 200. Alternatively, the number of the agents can be produced using random numbers. The pedestrian agents that have been produced in the inflow processing are added to the set of pedestrian agents that reside in the lattice space.

Step 805 represents the execution of a loop in which pieces of processing at Step 806 and Step 807 are repeated. The number of repetitions is equal to the number of all pedestrian agents residing in the lattice space.

At Step 806, each pedestrian agent is moved in moving directions set in cells.

At Step 807, if a signage that is people flow information is set, and if each pedestrian agent reaches a cell representing the influence range of the signage, a moving direction to which each pedestrian agent refers is changed to a direction for the relevant via-place at a prescribed ratio set in the people flow information control data 400.

At Step 808, Δt is added to the simulation time t.

At Step 809, if the simulation time t is less than a predefined end time, the flow goes back to Step 802 to repeat the above processing. On the other hand, if it is judged that the time t is equal to the end time, the above processing is finished.

The people flow operation unit 110 outputs desired information to databases, display units, and the like, while performing the above-mentioned processing. The desired information includes various pieces of information such as the number of pedestrian agents located at each lattice at each moment and a time required for each pedestrian agent to move from the relevant inflow position to the relevant outflow position.

The introduction effect operation unit 111 is a device for calculating an evaluation value used for evaluating the effect of people flow control on the basis of a result obtained from the movement processing of the pedestrian agents calculated in the people flow operation unit 110.

The introduction effect operation unit 111 calculates the following values, for example, as evaluation values used for evaluating the effect of people flow control.

The first value is a congestion degree for each area.
The congestion degree for each area is defined by the ratio of the number of passengers who actually residing in each area to the number of people that can be accommodated in each area and predefined for each area in the space. This calculation can be achieved in such a way that a space shown by the space information 300 is divided into several areas, and the number of pedestrian agents who reside in each area at a simulation time t is calculated. The number of people who can be accommodated in each area is defined in advance.

The second value is a delay time for each route.
This value is defined by a difference between a standard movement time for each of combinations of departure places and destination places and an actual movement time. The calculation of the actual movement time can be achieved by calculating a difference between the time when each agent flows in and the time when each agent flows out for each of combinations of departure places and destination places. Here, the standard movement time is defined in advance. For example, an actual movement time in a time period with light congestion such as a time period around the departure time of the first train can be defined as the standard movement time.

The third value is a lost time. The lost time is obtained by aggregating delay times for all combinations of departure places and destination places and for all passengers over a certain time period.

By comparing these evaluation values before performing people flow control with those after performing the people flow control, it becomes possible to evaluate the effects of the people flow control.

The fourth value is a congestion density. The congestion density is obtained by calculating an area occupied by one pedestrian, or calculating the number of people residing per unit area.

The state of simulation or evaluation values calculated by the introduction effect operation unit 111 are output by the display unit 105.

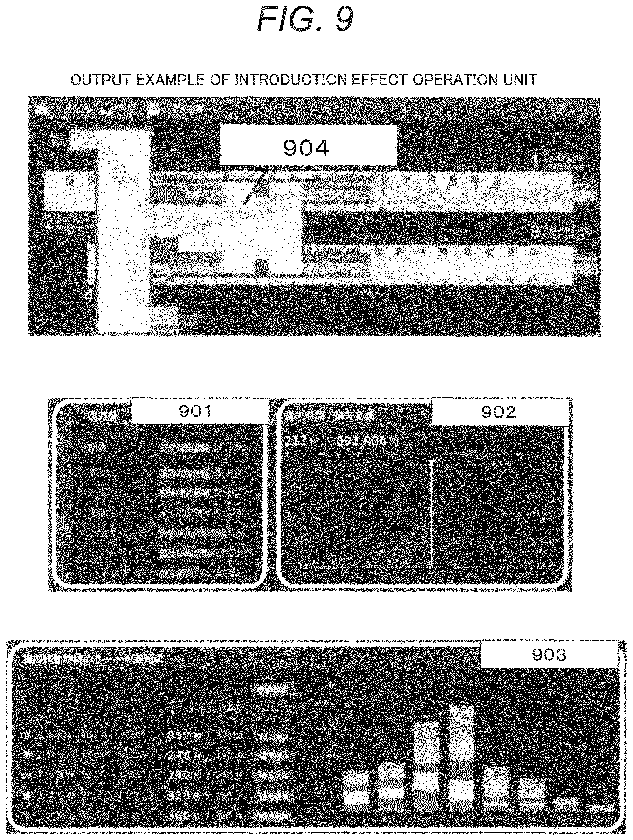

Figure 9 is a diagram showing an example of the output of the display unit 105. As shown in Figure 9, a congestion degree 901 for each area, a delay time 902 for each route, a lost time 903, and a congestion density 904 are shown in the display unit 105. It is conceivable that a congestion degree is displayed for each staircase.

### <Embodiment 2>

An object of this example is to change the destination places of passengers to different destination places by changing outflow places instead of setting via-places using signages that are people flow information, and to control the flow of people.

In the following drawings, components that perform the same pieces of processing as those performed by components in the example 1 are given the same reference signs, and explanations of such components are omitted.

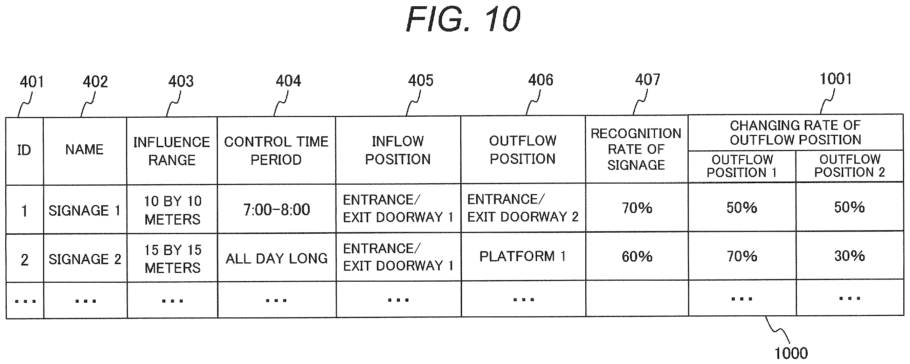

The present embodiment is different from the embodiment 1 in that this example includes people flow control information data 1000 that stores Changing Rate of Outflow Position 1001 as shown in Figure 10 instead of Passage Rate of Via-Place 408 included in the people flow control information data 400 shown in Figure 4.

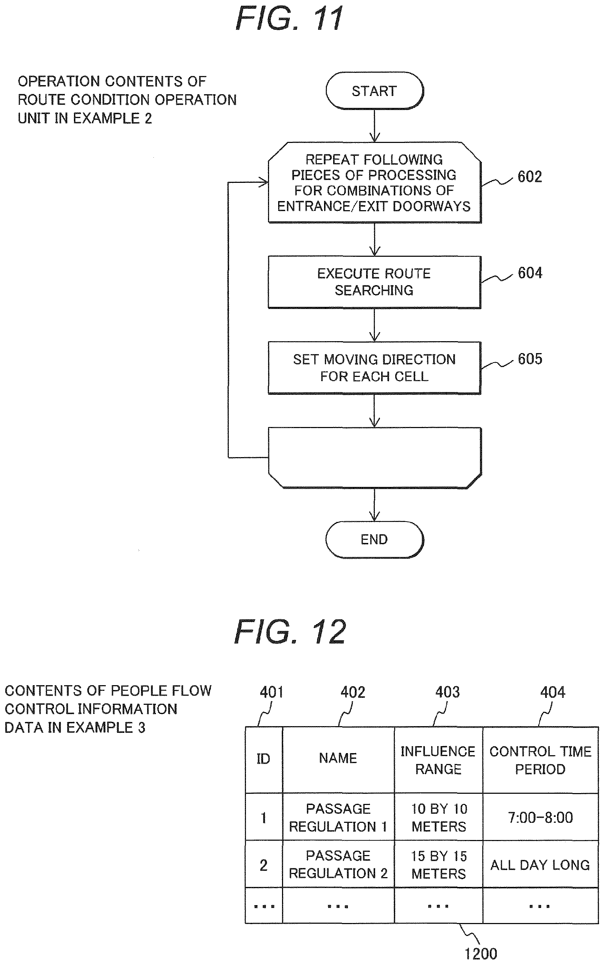

Furthermore, Figure 11 shows a flowchart showing the processing steps of a control function operation unit 109 in the present embodiment. The present embodiment is different from the embodiment 1 in that Step 601 at which people flow control information data is brought in; Step 606 at which a via-place is set with reference to the people flow control information; Step 607 at which route searching is executed in consideration of the via-place; and Step 608 at which the a moving direction of each cell to the via-place is set are omitted.

In addition, the processing by a people flow operation unit 110 in the embodiment 2 is performed in such a way that, when a moving pedestrian agent reaches the influence range of a signage, a moving direction to be referred to is changed to a moving direction to a new destination place", while, when a moving pedestrian agent reaches the influence range of a signage, a moving direction to be referred to is changed to a moving direction to a via-place at Step 807 shown in Figure 8 in the embodiment 1.

### <Embodiment 3>

An object of this example is to regulate passage at a certain spot in the premises of a train station and to control the flow of people by setting information representing passage regulation as people flow control information instead of setting a signage.

The embodiment 3 is different from the embodiment 1 and the embodiment 2 in that, as shown in Figure 12, the embodiment 3 includes people flow control information data 1200 that including only ID 401, Name 402, Influence Range 403, and Control Time Period 404 instead of the people flow control information data 400 shown in Figure 4. Passage regulation information is information showing that people cannot pass through ranges specified by Influence Range 403, and, for example, this information is used for simulating a situation in which the passage through certain ranges are regulated by posting station staff.

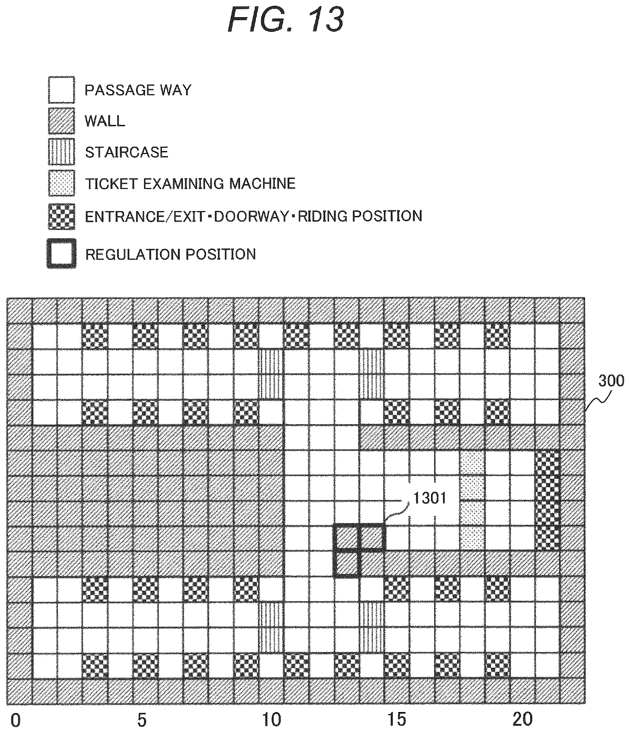

It is conceivable that the passage regulation information is set at a position 1301 as shown in Figure 13 in space information 300, and lattice information at the position where the passage regulation information is set is treated equally with a wall lattice. Processing performed by a people flow calculation unit 110 is the same as that performed in the embodiment 2.

Here, the present invention is not limited to the above-described examples, and it can includes various modifications. For example, in the embodiment 1, it is conceivable that, instead of executing route searching so that a route to be searched heads for a via-place after the via-place is set, route searching is executed in such a way that the cost of the route searching for searching a lattice at the via-place position is adjusted. In this case, instead of Passage Rate of Via-Place 408 in the people flow control information data 400, an additional cost at each via-place is stored in the people flow control information data 400. Furthermore, in this case, in the operation of the control function operation unit 109, Step 606 where a via-place is set is omitted, and Step 607 is changed to a step where route searching is executed in consideration of the additional cost at each via-place. As another modification, it is conceivable that the people flow control information includes the number and driving directions of operating automatic ticket examining machines. In addition, as another modification, it is conceivable that people flows represented by pedestrian agents are not limited to passengers in the premises of a train station, but also the people flows are pedestrians heading for plural elevators in a building, and in this case, displays instructing people to ride in which elevators and the like can be thought of as people flow control information.

Furthermore, because, when a setting aspect of people flow information is input, the system according to this example calculates an effect according to the setting aspect, if plural setting aspects are input, effects according to the respective setting aspects are displayed, therefore it is possible to efficiently examine what kind of people flow control should be executed in order to make facilities desirable.

### Reference Signs List

- 101: Receiving Unit
- 102: Data Management Unit
- 103: Input Unit
- 104: Operation Unit
- 105: Display Unit
- 106: Movement Demand Database
- 107: Space Information Database
- 108: People Flow Information Database
- 109: Control Function Operation Unit
- 110: People Flow Operation Unit
- 111: Effect Operation Unit

## Claims

1. A people flow evaluation system comprising:
a receiving unit for receiving people flow information;
an input unit for inputting people flow control information;
a data management unit for storing people flow control information data;
a control function operation unit for calculating control functions from the people flow control information and the people flow control information data;
a people flow operation unit for performing simulation processing on people flows from the people flow information and the control functions; and
an effect operation unit for calculating a people flow control effect on the basis of the people flow simulation results of the people flow operation unit.

2. The people flow evaluation system according to claim 1,
wherein the people flow control information data includes: information showing the ranges of influences caused by the people flow control information; and information showing people flows on which controls are performed for respective combinations of departures and destinations.

3. The people flow evaluation system according to claim 1,
wherein the input unit includes a function of selecting one of a plurality of pieces of the people flow information and disposing the selected one in a simulation space.

4. The people flow evaluation system according to claim 3,
wherein the input unit includes a function of being able to select the disposition direction of the selected piece of people flow control information in the simulation space.

5. The people flow evaluation system according to claim 2,
wherein the people flow control information data includes: the positional information of a plurality of via-places which pedestrians, who recognize the people flow control information, head for; and information showing the ratios of the numbers of passengers heading for the respective via-places,
the control function operation unit includes a function for setting the moving directions at respective places at which pedestrian agents head for the via-places from the departure places and for setting the moving directions at respective places at which pedestrian agents head for the destination places from the via-places, and
the people flow operation unit includes a function for changing the moving directions of the pedestrians who reach the ranges of the influences to moving directions for the via-places.

6. The people flow evaluation system according to claim 2,
wherein the people flow control information data includes: the positional information of a plurality of destination places which pedestrians, who recognize the people flow control information, head for; and information showing the ratios of the numbers of passengers heading for the respective plurality of destination places,
the control function operation unit includes a function for setting the moving directions at respective places at which pedestrian agents head for the plurality of destination places from the departure places, and
the people flow operation unit includes a function for changing the moving directions of the pedestrians who reach the ranges of the influences to the moving directions for the respective plurality of destination places.

7. The people flow evaluation system according to claim 1,
wherein the people flow control information data includes information representing the recognition rates for pedestrians to recognize the people flow control information.

8. The people flow evaluation system according to claim 1,
wherein the people flow control information is a signage to urge pedestrians to select desired routes.

9. The people flow evaluation system according to claim 1,
wherein the people flow control information includes regulation information for regulating the passages of pedestrians, and
the input unit includes a function for disposing passage regulation information in a simulation space.

10. The people flow evaluation system according to claim 1,
wherein the effect operation unit includes a function for calculating any of congestion degrees for respective areas, delay times, lost times, and congestion densities for respective routes.

11. A method for representing people flow control in which, using a calculation system for calculating effects for respective setting aspects input according to people flow control information, the effects for a plurality of input setting aspects are displayed.

12. The method for researching people flow control according to claim 11,
wherein the system includes:
a receiving unit for receiving people flow information;
an input unit for inputting people flow control information;
a data management unit for storing people flow control information data;
a control function operation unit for calculating control functions from the people flow control information and the people flow control information data;
a people flow operation unit for performing simulation processing on people flows from the people flow information and the control functions; and
an effect operation unit for calculating a people flow control effect on the basis of the people flow simulation results of the people flow operation unit.
